Europäisches Patentamt

(19) European Patent Office

Office européen des brevets

(11) Publication number: **0 240 372 B1**

# EUROPEAN PATENT SPECIFICATION

(45) Date of publication of patent specification :
18.09.91 Bulletin 91/38

(51) Int. Cl.⁵ : **G01V 5/10**

(21) Application number : 87400187.8

(22) Date of filing : 28.01.87

(54) **Thermal decay time logging method and apparatus.**

(30) Priority : 31.01.86 US 825182

(43) Date of publication of application :
07.10.87 Bulletin 87/41

(45) Publication of the grant of the patent :
18.09.91 Bulletin 91/38

(84) Designated Contracting States :
AT DE ES FR GB GR IT NL

(56) References cited :
EP-A- 194 027
EP-A- 0 095 900
US-A- 4 292 518

(73) Proprietor : SCHLUMBERGER LIMITED
277 Park Avenue
New York, N.Y. 10172 (US)
DE ES GB GR NL AT
Proprietor : SOCIETE DE PROSPECTION
ELECTRIQUE SCHLUMBERGER
42, rue Saint-Dominique
F-75340 Paris Cédex 07 (FR)
FR IT

(72) Inventor : Wraight, Peter
3030 Bonney Briar Drive
Missouri City Texas 77459 (US)

(74) Representative : Hagel, Francis
Etudes et Productions Schlumberger A
L'ATTENTION DU SERVICE BREVETS 26, rue
de la Cavée B.P. 202
F-92142 Clamart Cédex (FR)

## Description

## BACKGROUND OF THE INVENTION

### Field of the Invention

This invention relates in general to nuclear logging and in particular to a new and improved pulsed neutron logging method and apparatus for determining the thermal decay time constant $\tau_F$ and correlative capture cross-section $\Sigma_F$ of formations surrounding the borehole. Still more particularly this invention relates to a method and apparatus for estimating the formation tau, $\tau_F$, and formation capture cross-section sigma, $\Sigma_F$, more precisely through the simultaneous measurement of the thermal decay time constant, $\tau_B$, and correlative capture cross-section $\Sigma_B$ of borehole materials.

### Description of the Prior Art

The technological history of thermal decay time or pulsed-neutron capture logging has been developed in prior patents. U.S. patent 3,379,882 to Arthur H. Youmans issued April 23, 1963 outlines the physics of pulsed nuclear logging and describes the method of irradiating a formation from a borehole tool with a short burst of fast neutrons and measuring the decline rate of slow neutrons or gamma rays which result from thermal neutron capture in the formation as an indication of the identity of the nuclei of the material present in the formation.

The Youmans patent teaches that the measurement of capture gamma rays is actually more directly indicative of what has occurred in the formation after neutron bursting or pulsing than is a "slow" or thermal neutron measurement. But, if a measurement is made of the entire gamma ray flux produced by the neutron pulse, the initial portion of the gamma ray population curve will depend substantially upon the gamma rays produced by the fast neutron processes, and that the latter portions of the gamma ray population depends entirely upon the slow and thermal neutron processes in the formation. For that reason, as Youmans teaches, the inelastic scattering gammas are preferably distinguished from the capture gammas by initiating the detection interval only after the inelastic gammas may be expected to have substantially disappeared. In other words, the detection interval is preferably started only after the relatively short-lived inelastic scattering gamma rays may be expected to have been dissipated in the earth, and when the thermal neutron population has reached its peak.

Youmans recognized that the lifetime curve of thermal neutrons is a composite of captures occurring in borehole materials, in the porous invaded zone surrounding the borehole, and in the uninvaded formation beyond. Youmans indicated that the preferred method of making a neutron lifetime measurement, for quantitative determination of formation characteristics, is to observe the complete decline curve of the neutron induced radiation (thermal neutrons or capture gammas) from the termination of the neutron pulse to the disappearance of all induced radiation (excluding the activation or background gammas). Thereafter, it is possible to select the portion of the curve having decline characteristics most representative of the formation irradiated, and the other declining portions of the curve will represent the borehole and the borehole substances.

It is generally assumed that the thermal neutrons in the borehole will be captured early, and therefore it is the latter portion of the time cycle which is representative of the formation. However, this assumption is predicated on the requirement that the borehole be filled with substances, such as salt water, which have a thermal neutron capture cross-section greater than either oil or rock substances. If, on the other hand, the borehole is filled with fresh water, oil, or air, the neutron lifetime in the borehole may be much greater than that in the formation material, and it is the earlier portion of the curve which will be representative of the formation. Youmans suggests, then, that it may be desirable to assure that the latter portion of the curve is the portion which is representative of the formation, by the expedient of filling the borehole with salt water (or some other suitable substance) before performing the logging operation.

To restate the foregoing in simpler terms, if the borehole fluids have a higher thermal neutron capture cross-section (and a shorter correlative tau or capture time constant) than that of the formation substances, then the early portion of the curve will be representative of the borehole, and the later portion will be representative of the formation. The second two intervals will best indicate the lifetime of the thermal neutrons in the formations.

U.S. patent 3,662,179 to Frentrop and Wahl issued May 9, 1972 discloses a pulsed neutron logging system which has seen wide commercial application. Frentrop and Wahl invented a three gate system to measure formation tau, and assumed that by waiting a sufficient time after the neutron burst terminated, the borehole gamma rays induced by neutron capture have died out and that the remaining gamma rays result entirely from formation nuclei capture of thermal neutrons and natural and activation (background) gamma rays.

The Frentrop and Wahl patent assumed that the slope of the mid-portion of the logarithm count of gamma rays is a measure of the formation decay time, $\tau_F$. The slope or decay time is determined by sampling the count rates during the first two of the three gates. A third gate is positioned after the formation induced gamma rays have died away and is used to measure background. Background is then subtracted from the readings of Gates I and II before computing decay time. The Frentrop and Wahl system provided variable gate width times and starting locations with respect to the end of the neutron burst, yet the relationship of one to another was fixed.

Gate I starts 2T microseconds (μ sec) after the end of the neutron burst. Gate I lasts T μsec; Gate II lasts 2T μsec and Gate III is positioned from 6T to 9T. Assuming an exponential decay, (i.e., $N = A_e{}^{-t/\tau}F$), T is adjusted until the counts of the gates, $N_1$, $N_2$, $N_3$ satisfied the equation,

$$2N_2\text{-}N_1\text{-}N_3 = 0.$$

When the equation is satisfied, adjusting T from cycle to cycle, $T = \tau_F$.

An improvement in measurement accuracy of formation decay time, $\tau_F$, is disclosed in U.S. patent 4,223,218 to Jacobson, issued on Sept. 16, 1980, U.S. patent 4,224,516 to Johnstone issued on Sept. 23, 1980, U.S. patent 4,267,447 to Johnstone issued on May 12, 1981, and U.S. patent 4,292,518 to Johnstone issued on Sept. 29, 1981. The Jacobson and Johnstone system provides sixteen (16) detection gates as distinguished from the three gate system of Frentrop and Wahl. The entire time scale of the neutron generator burst and gate opening and closings is controlled according to a characteristic time, T. But where as in the Frentrop and Wahl system the T is continuously varied to be identical to the measured value of $\tau$, the Jacobson and Johnstone system adjusts it by surface electronics in discrete steps called F-modes. The variable time - scale, or F-modes, adjust the duration of the neutron burst and position the gates on the decay curve to most successfully avoid the early casing and borehole signal. Gate I starts approximately $2\tau_F$ μsec from the end of the minitron burst. The purpose of the time delay between the preceding neutron burst and the beginning of the gating sequence is to permit gamma rays emanating from the immediate borehole environment, (e.g. borehole fluid, casing, cement annulus, tool housing, etc. ) to die out before detection of the count rate data from the formation is commenced.

U.S. patent 4,122,338 to Smith and Pitts issued on October 24, 1978 was an attempt to respond to the problem, recognized as outlined above by Youmans, that, depending on the borehole environment, the gamma ray counts measured after a fixed delay from the end of the neutron burst may include borehole events. In other words, the systems disclosed in the Frentrop and Wahl patent and in the Jacobson and Johnstone patents assume that the borehole thermal decay time, $\tau_B$, is substantially shorter than the thermal neutron decay time of the earth formation surrounding the borehole. The Smith and Pitts patent indicates that this assumption is generally correct if the borehole is filled with a drilling fluid having a high chlorine or salt water content. However, in boreholes containing air, gas, fresh water or oil base muds, the relationship of $\tau_F$ being significantly longer than $\tau_B$ may not hold. Smith and Pitts measure the actual salinity of the borehole fluids. These measurements are used to control the time delay prior to opening the first measurement gate for detecting $\tau_F$, thereby assuring that borehole gamma rays are no longer present when gamma rays are counted.

U.S. patent 4,326,129 to Neufeld issued on April 20, 1982 discloses a method and apparatus for logging boreholes containing air, gas, fresh water or oil e.g., boreholes having a large borehole decay constant, $\tau_B$, in comparison with the formation decay constant, $\tau_F$. Neufeld specifies measuring an impulse response function h(t) by using a correlator for autocorrelating the output signals from a detector in response to neutron bursts in the borehole. A correlator for crosscorrelating the output signals from the detector with the signals representing the energy pulses obtained from the source is also disclosed. Neufeld expresses the decaying portion of the impulse response function h(t) as a sum of two component functions exponentially decaying at different rates. These component functions are individually associated with the thermal neutron slowing down processes in the formations surrounding the borehole and in the fluid within the borehole.

Neufeld expresses the impulse response function as h (t) = $Ae^{-\alpha t}$ + $Be^{-\beta t}$ where, A, B, $\alpha$ and $\beta$ are constants; $Ae^{-\alpha t}$ represents the neutron population of the formation component; $Be^{-\beta t}$ represents the neutron population of the fluid component in the borehole. The constants $\alpha$ and $\beta$ represent the thermal neutron decay constants of the earth formation and of the fluid in the borehole respectively. Thus, regardless of the relative values of $\alpha$ and $\beta$, Neufeld specifies the measurement of h(t), and then fitting a two exponential model to the measured data to determine $\alpha$ and $\beta$. Neufeld suggests the use of least-squares analysis to determine $\alpha$ and $\beta$ of the two exponential model from the measured h(t) data.

EP patent application No. 95900 depicts a nuclear logging apparatus for the simultaneous determination of respectively borehole and formation thermal neutron decay time, $\tau_B$ and $\tau_F$, by irradiating said borehole and formation with successive bursts, and by combining the signals, detected in at least four time windows following each burst, according to predetermined relationship.

A problem has existed in all of the prior work of pulsed neutron logging in that no method and apparatus has been susgested or devised to more precisely measure the borehole decay constant, $\tau_B$, so that where compensation of the formation decay constant is warranted, a more precise compensation and ultimate value of $\tau_F$ may be determined.

EP 0 240 372 B1

Idenditification of Objects of the Invention

A primary object of this invention is to provide an apparatus and method for timing neutron pulse generation so that the borehole decay constant $\tau_B$ may more accurately be measured without compromising the statistics of the formation tau.

Another object of the invention is to provide a pulsed neutron and measurement regime which simultaneously provides an estimate for borehole decay constant, $\tau_B$, and formation decay constant, $\tau_F$.

Still another object of this invention is to provide a burst-measurement schedule which includes a short neutron burst for enhancing the measurement of borehole decay rate, $\tau_B$, and a long neutron burst for enhancing the measurement of the formation decay rate $\tau_F$.

It is another object of the invention to provide a thermal decay logging bursting regime which allows the neutron generator to be operated at high output thereby providing good counting statistics for determining formation tau, $\tau_F$, while also providing a manageable lower count rate for the measurement of borehole materials tau, $\tau_B$, thereby requiring only small dead-time corrections.

Another object of the invention is to provide a method for determining borehole materials tau, $\tau_B$, and formation tau, $\tau_F$, through an iterative technique by which formation tau is determined from count rate information following the long burst which has been stripped of borehole materials decay signal content and borehole materials tau, $\tau_B$, is determined from count rate information following the short burst which has been stripped of formation decay signal content.

The objects of the invention as well as other advantages and features of it result from a method and system for determining thermal neutron decay characteristics of earth formation surrounding a borehole according to claims 1 and 15 . According to a feature of the invention, a first short time burst of fast neutrons is provided in a burst-measurement schedule at a location within the borehole thereby irradiating borehole materials and the earth formation adjacent that borehole location. Gamma rays indicative of the concentration of thermal neutrons in the borehole materials and in the formation are detected and counted following the short neutron burst.

Following the detection of gamma rays resulting from the short-burst of neutrons, a relatively long time burst of fast neutrons is applied at substantially the same location within the borehole thereby again irradiating the borehole materials and the earth formation adjacent the borehole location. Gamma rays indicative of the concentration of thermal neutrons in the formation and in the borehole materials following the long neutron burst are detected and counted.

From the count rates of gamma rays detected after the short neutron burst and count rates of gamma rays detected after the long neutron burst, a borehole compensated thermal neutron rate of decay of the earth formation, $\tau_F$, is estimated. The rate of decay of thermal neutrons of the borehole materials, $\tau_B$, is simultaneously determined.

The method and apparatus provides for repeating the short burst - long burst of fast neutrons with measurement gates following each burst while moving the logging tool through the borehole so that gamma rays are accumulated over several bursting/measurement cycles opposite a small borehole region.

According to another feature of the invention, the gamma rays in response to the short burst of neutrons are detected after a short delay time after the end of the first burst of fast neutrons. The gamma rays in response to the long burst of neutrons are detected after a relatively long delay time after the end of the second burst of neutrons.

In a preferred embodiment, the duration of the short burst is relatively long as compared to the expected time constant of the borehole materials, $\tau_B$, but which is relatively short as compared to the expected time constant of the formation $\tau_F$. As a result after the short delay time from the end of the short burst, the total count rate due to the borehole materials and to the formation is approximately equal to the maximum practical counting rate of the signal counting circuits of the logging system and the thermal neutron count rate component due to borehole materials predominates in the total thermal neutron count rate.

In a preferred embodiment, the duration of the long burst is relatively long as compared to the expected time constant of the formation, $\tau_F$, such that after the relatively long delay from the end of the long burst, the total count rate due to borehole materials and to the formation is approximately equal to the maximum practical counting rate of the signal counting circuits of the logging system and the thermal neutron count rate component due to the formation predominates in the total thermal neutron count rate.

The thermal neutron decay time constant of the formation, $\tau_F$, is determined through an iterative procedure by estimating it from the gates following the long burst which have been stripped of borehole decay counts determined from gates following the short burst. Similarly, the borehole materials time constant, $\tau_B$, is estimated from the gates following the short burst which have been stripped of formation decay counts determined from gates following the long burst. The iterative estimation method is terminated after the constants $\tau_F$ and $\tau_B$ fail to change by less than a predetermined amount from one iteration to the next.

4

As described above, the borehole decay constant is determined from corrected count rate signals following the short burst, and the formation decay constant is determined from corrected count rate signals following the long burst. Of course, where in the unusual case, the decay constant of the borehole is long compared to the decay constant of the formation, the decay constant of the formation would be determined from corrected count rate signals following the short burst and the decay constant of the borehole would be determined from corrected count rate signals following the long burst.

## BRIEF DESCRIPTION OF THE DRAWINGS

The objects, advantages and features of the invention will become more apparent by reference to the drawings which are appended hereto and wherein like numerals indicate like parts and wherein an illustrative embodiment of the invention is shown, of which:

Figure 1 is a schematic view of a thermal neutron decay downhole tool and associated surface instrumentation;

Figure 2 is a schematic electrical circuit analog of borehole materials and the formation in response to fast neutron bursting in a borehole and illustrates by analogy the thermal neutron charging and decay characteristics of the borehole materials and the formation.

Figures 3A-3F illustrates the charging and decay characteristics of borehole materials and the formation individually in response to relatively short and relatively long bursts of fast neutrons.

Figure 4 is a graphical representation of logarithmic count rate plotted as a function of time and showing bursting schedules, gating schedules and normalized logarithmic count rates which result from short and long neutron bursts; and

Figure 5 is a graphical representation of total logarithmic count rates following a short burst and a long burst of fast neutrons and illustrates an iterative stripping method by which formation decay characteristics are determined from count rate information following the long burst stripped of count rates representative of borehole materials, and borehole materials decay characteristics are determined from count rate information following the short burst stripped of count rates representative of the formation.

## DESCRIPTION OF THE INVENTION

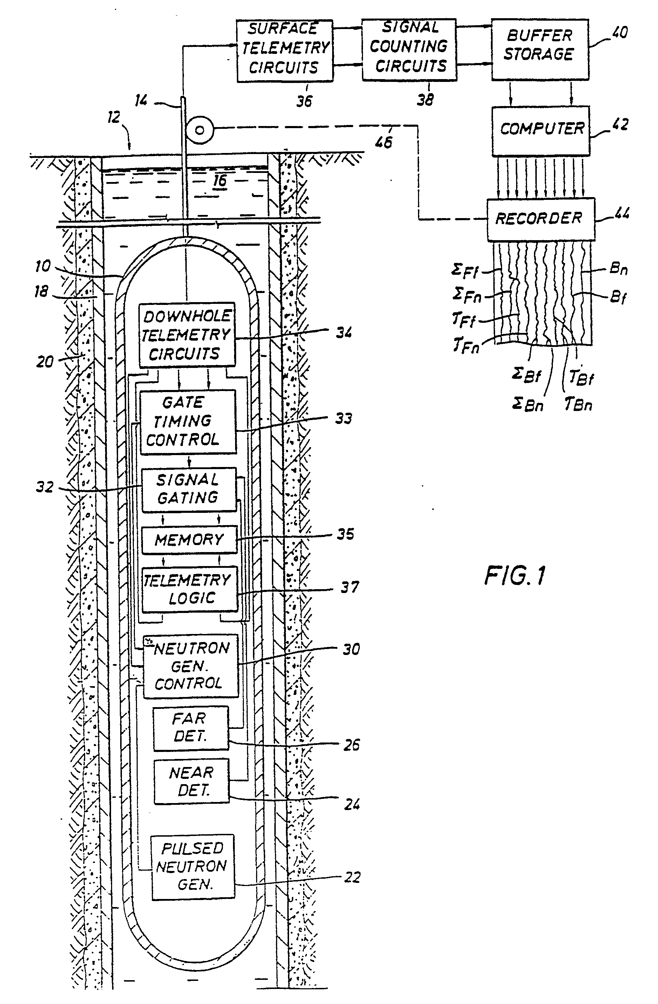

This invention relates to a novel and improved fast neutron bursting and measurement method and apparatus which is described in detail with reference to Figures 1, 4 and 5. The apparatus needed to accomplish the method is similar in many respects to that disclosed in U.S. patent 4,223,218 issued to Jacobson on September 16, 1980 and assigned to Schlumberger Technology Corporation as is this invention. For an overall description of the tool, telemetry and surface instrumentation, the introductory portion of U.S. patent 4,223,218 is repeated below, before turning to the bursting and detection schedules and the method of extracting borehole materials tau, $\tau_B$ and formation tau, $\tau_F$ from the data.

Figure 1 shows a well logging tool constructed in accordance with the invention and includes a fluid-tight, pressure-and-temperature resistant sonde or tool 10 that is adapted to be suspended in and moved through a well bore 12 by an armored cable 14. The well bore 12 is illustrated as containing a borehole fluid 16 and as including a steel casing 18 and surrounding cement annulus 20. Although no tubing is shown in the borehole, the tool 10 may if desired be sized for through-tubing use.

The downhole tool 10 includes a pulsed neutron generator 22 and two radiation detectors 24 and 26 that are located at different spacings from the neutron generator 22. The detector 24 spaced closest to the neutron generator is designated the "near" detector and the detector 26 located farther from the neutron source is designated the "far" detector. For the purpose of the present invention, the neutron generator 22 is preferably of the type which generates discrete pulses of fast neutrons, e.g. 14 Mev., and may for example be of the types described in more complete detail in U.S. Pat. No. 2,991,364 to C, Goodman, dated July 4, 1961, and U.S. Pat. No. 3,546,512 to A.H. Frentrop, dated Dec. 8, 1970. Operation of the neutron generator 22 is controlled in part by a neutron generator control circuit 30, and this circuit may also be of the types described in the aforementioned patents. The detectors 24 and 26 may be of any construction suitable for the detection of the thermal neutron concentrations in the surrounding earth formation and, to that end, may be of the thermal neutron sensitive type, e.g. helium 3 filled proportional counters, or of the gamma ray sensitive type, such as thallium-activated sodium iodide detectors. In the preferred embodiment, the detectors 24 and 26 preferably comprise sodium iodide scintillation detectors and, in this respect, will be understood to include the usual photomultiplier tubes, photomultiplier high voltage supplies, and amplifier-discriminators (not shown). It will also be understood that other downhole power sources (not shown) are provided as required to drive the neutron generator 22 and other downhole circuits. Power for the well tool 10 is supplied over the cable 14 from a surface power supply (not shown), as is conventional.

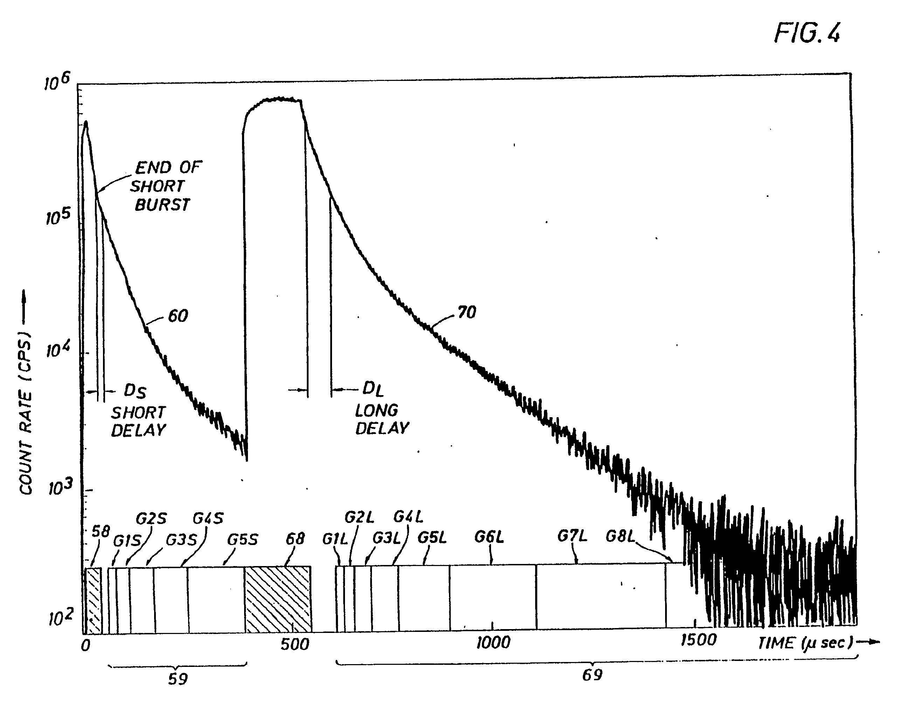

Output pulses from the near detector 24 and the far detector 26, representative of the concentration of thermal neutrons in the irradiated formation, are applied to signal gating circuits 32. The signal gating circuits 32 are controlled by gate timing circuits 33, which also control the operation of the neutron generator control circuit 30. From the signal gating circuits 32 the detector signals are counted and stored in memory circuits 35 and thence, under control of telemetry logic circuits 37, are applied to downhole telemetry circuits 34 for transmission to the surface over the cable 14. The overall design of the neutron generator control circuit 30, the signal gating circuits 32, the gate timing circuits 33, the memory circuits 35, and the telemetry circuits 34 is similar to that described in the above mentioned U.S. patent 4,223,218, but are not described here for the sake of brevity. The circuits are designed to achieve the timing schedules for bursting and detection according to that illustrated in Figure 4 which is discussed in detail below.

The downhole telemetry circuits 34 may be of any known construction for encoding, time division multiplexing, or otherwise preparing the data-bearing signals applied to them from the telemetry logic circuits 37 and for impressing such data on the cable 14. At the earth's surface, the data-bearing signals from the near and far detectors 24 and 26, respectively, are amplified, decoded, demultiplexed and otherwise processed as needed in the surface telemetry circuits 36, which may also be conventional. The telemetry circuits 34 and 36 also include circuits for the receipt and transmission, respectively, of command messages from the surface. Suitably, the circuits 34 and 36 comprise a bi-directional data telemetry system useful for these purposes and having a 10 K bit per second upward data rate.

Following surface telemetry circuits 36 the near-detector and far-detector signals are separately counted in signal counting circuits 38 to acquire the thermal neutron decay curve data over a desired accumulation interval $\Delta t$. Upon termination of the data accumulation time $\Delta t$, which may be selected, for example, to correspond to a desired interval of depth in accordance with logging speed of the tool, the count rate data accumulated in the signal counting circuits 38 and transferred to buffers 40 and the signal counting circuits 38 are reset to zero.

From storage 40, the count rate data are processed in a computer 42, which suitably comprises a microprocessor or, alternatively, a general purpose digital computer such as that manufactured by Digital Equipment Corporation, Maynard, Massachusetts, under the designation PDP-11. As is described more fully hereinafter, the computer 42 processes the count rate data from the respective detectors to develop various desired outputs, including, for example, the decay time constants of the bore hole and formation as measured with the near detector, $\tau_{Bn}$ and $\tau_{Fn}$, and the decay time constants of the borehole and formation as measured with the far detector, $\tau_{Bf}$ and $\tau_{Ff}$, the corresponding macroscopic capture cross-sections $\Sigma_{Bn}$, $\Sigma_{Bf}$, $\Sigma_{Fn}$ and $\Sigma_{Ff}$, and various other selected outputs such as background counting rating $B_n$ and $B_f$, from the respective detectors.

All of these outputs may be recorded in conventional fashion as a function of tool depth in a recorder 44. The usual cable-following mechanical linkage, indicated diagrammatically at 46 in Figure 1, is provided for this purpose.

Analogy of the borehole materials and formation charge-up and decay of thermal neutrons to an electrical circuit

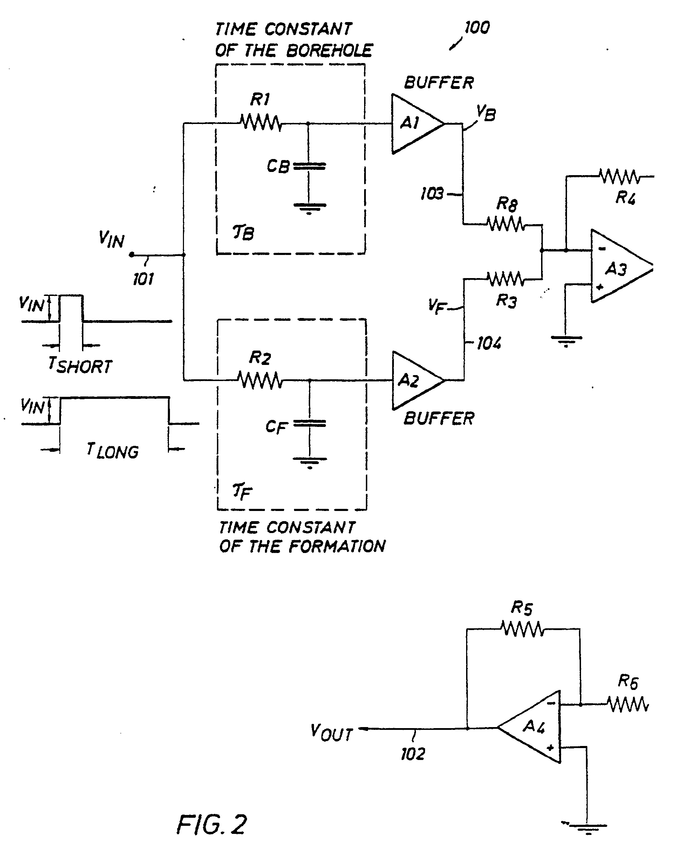

As an aid to the understanding of the "charge-up" and decay of thermal neutrons in the borehole materials and surrounding formations, the electrical analog of Figure 2 is instructive. Circuit 100 includes an $R_1 C_B$ circuit and buffer amplifier $A_1$ in parallel with an $R_2 C_F$ circuit and buffer amplifier $A_2$. The $R_1 C_B$ circuit is an analogy of the charging and decay characteristics of the borehole materials, where the time constant of the circuit

$$\tau_B = \frac{1}{R_1 C_B}$$

is an analogy to the composite time constant of the borehole materials. Likewise, the $R_2 C_F$ circuit is an analogy of the charging and decay characteristics of the formation surrounding the borehole, where the time constant of the circuit

$$\tau_F = \frac{1}{R_2 C_F}$$

is an analogy to the time constant of the formation. The circuit of Figure 2 produces a time varying output voltage on lead 102 in response to a square pulse applied on lead 101.

The circuit of Figure 2 is instructive by considering the charging and decay of voltages $V_B$ on lead 103 and $V_F$ on lead 104 as components of the voltage on lead 102 in response to short and long voltage pulses $V_{in}$ on lead 101.

Assuming zero initial conditions on the capacitors $C_B$ and $C_F$, the voltages as a function of time t measured from the beginning of the pulse $V_{in}$ can be written,

$$V_B \;=\; V_{in} \;(1-e^{-t/\tau_B}),$$

$$V_F \;=\; V_{in} \;(1-e^{-t/\tau_F}).$$

If the duration of the short voltage pulse is $t_s$, then the voltage level on the output lead 102 at the end of the short voltage pulse is

$$V_{out} \;=\; V_{in} \;(1-e^{-t_s/\tau_B}) \;+\; V_{in} \;(1-e^{-t_s/\tau_F}).$$

$$=\; \text{borehole component} + \text{formation component}.$$

Likewise, assuming zero initial conditions on the capacitor $C_B$ and $C_F$, the combined voltage level on output lead 102 at the end of the long pulse is

$$V_{out} \;=\; V_{in} \;(1-e^{-t_L/\tau_B}) \;+\; V_{in} \;(1-e^{-t_L/\tau_F}).$$

$$=\; \text{borehole component} + \text{formation component}.$$

An estimate of the amplitude of the formation component voltage at the end of the long voltage pulse allows the estimate of the formation voltage at the end of a short voltage pulse,

$$\frac{\text{Amplitude Formation Short}}{\text{Amplitude Formation Long}} \;=\; \frac{V_I \;(1-e^{-t_s/\tau_F})}{V_I \;(1-e^{-t_L/\tau_F})}$$

$$\text{or} \quad AFS \;=\; AFL \; \frac{(1-e^{-t_s/\tau_F})}{(1-e^{-t_L/\tau_F})}.$$

Likewise, an estimate of the amplitude of the borehole component voltage at the end of the short voltage pulse allows the estimate of the amplitude of the borehole voltage at the end of the long voltage pulse,

$$\text{Amplitude Borehole Long} \quad = \quad \not{N}_I \ (1-e^{-t_L/\tau_B})$$

$$\text{Amplitude Borehole Short} \quad = \quad \not{N}_I \ (1-e^{-t_S/\tau_B})$$

$$\text{or ABL} \quad = \quad \text{ABS} \ \frac{(1-e^{-t_L/\tau_B})}{(1-e^{-t_S/\tau_B})}.$$

### Short-burst and long-burst charging and decay in thermal decay time logging

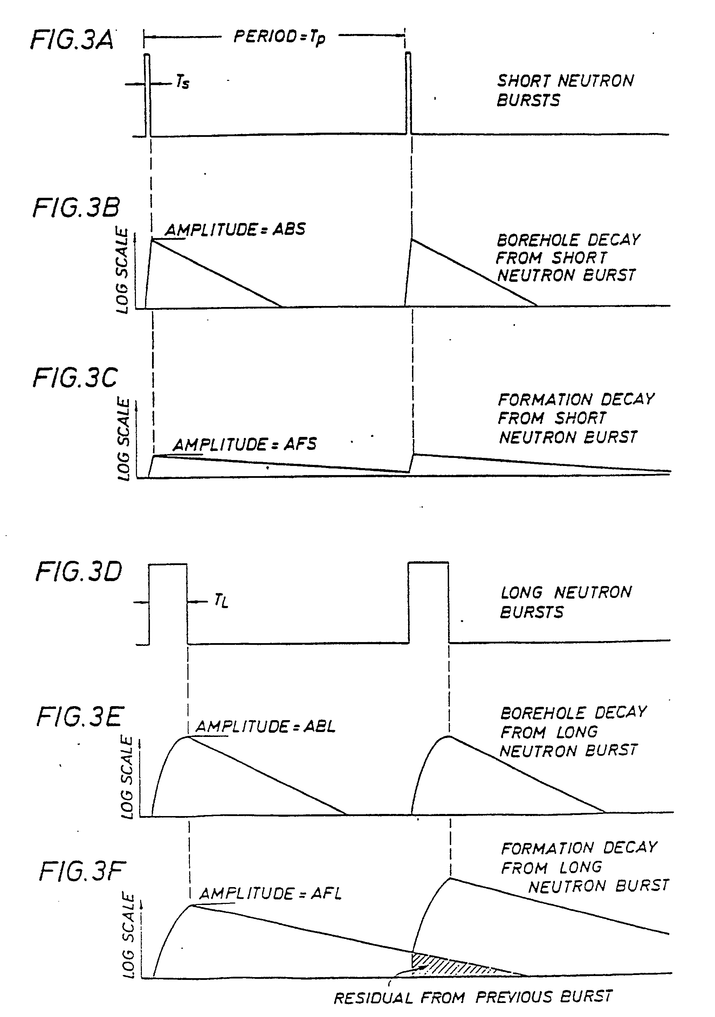

In thermal decay time logging practice, the time constant of the formation $\tau_F$ is usually considerably longer than the time constant of the borehole materials $\tau_B$. If the time length of the neutron burst is short, as illustrated in Figure 3A, the shorter time constant of the borehole materials allows the thermal neutron population to charge to a higher relative amplitude as illustrated in Figure 3B than the amplitude of thermal neutron population of the formation as illustrated in Figure 3C. Also, the decay rate of the borehole material, allows the thermal neutron population to decay essentially to zero for a period between pulses $T_p$ as illustrated in Figure 3B, while the longer time constant of the formation causes the decay to occur more slowly, with possibly a few thermal neutrons continuing to exist at the start of the next burst.

Figures 3D, 3E and 3F illustrate the effect of the long neutron burst on the charging and decay of thermal neutrons in the borehole materials and in the formation in response to periodic bursts of a longer time length. In the example of Figures 3D, 3E and 3F, the bursting time length $T_L$ is relatively long with respect to the formation time constant $\tau_F$, and is very long with respect to the borehole materials. As illustrated in Figure 3E, the thermal neutron population of the borehole materials saturates at its "fully charged" level toward the end of the long burst and then decays at its relatively short time constant rate. Simultaneously, the formation charge up as illustrated in Figure 3F has a longer time to charge, (as compared to the charge up of Figure 3C) and therefore achieves a high level at the end of the long burst. The decay then begins and continues to decay at a slower rate than the borehole materials and produces residual thermal neutrons into the next cycle for the example period $T_p$ and time constant $\tau_F$ illustrated.

### Short burst, long burst thermal neutron logging and stripping of formation decay count rate information from the total count rate following the short burst and stripping of borehole decay rate information from the total count rate following the long burst.

According to the invention, short burst-long burst cycles are provided to irradiate the formation and unavoidably, the borehole materials. The short burst is of a duration which is relatively long, as compared to the expected time constant of the borehole materials, $\tau_B$, but is relatively short as compared to the expected time constant of the formation $\tau_F$. The short burst time length is selected such that after a short delay from the end of the short burst, the total count rate of the "charged" borehole materials and the formation is approximately equal to the maximum counting rate of signal counting circuits 38 for the near detector 24 and the far detector 26 (Figure 1). Due to the shorter time constant of the borehole materials, $\tau_B$, the thermal neutron count rate component due to borehole materials predominates in the total thermal neutron count rate.

The long burst, following a detection period of the short burst, is of a relatively long duration as compared to the expected time constant of the formation decay constant $\tau_F$, such that after a longer delay (as compared to the delay after the short burst) from the end of the long burst, the total count rate due to the borehole materials and to the formation is approximately equal to the maximum counting rate of signal counting circuits 38 for the near detector 24 and the far detector 26. After the delay following the long burst, the thermal neutron count rate component due to the formation predominates in the total thermal neutron count rate.

The predominance of formation thermal neutron count rate information in the signal following the long burst enables an estimate of the formation decay component. Using a charge up relation obtained by analogy to the model presented in Figure 2, an estimate of the formation component following the short burst is determined. Such formation component is "stripped" from the total count rate information following the short burst which enables an estimate of the borehole materials component which results from the short burst.

Again using a charge up relation by analogy to the model of Figure 2, an estimate of the borehole materials component following the long burst is determined. Such borehole materials component is "stripped" from the total count rate information following the long burst and the formation component which results from the long burst is re-estimated. The procedure is repeated until the estimates of the formation component and the borehole component changes by less than predetermined amounts from one iteration to the next.

The preferred bursting-detection schedules according to the invention and the details of the stripping methods follow.

Bursting and Detection Schedule

Figure 4 illustrates the fast neutron bursting schedule and the counting gates following each neutron burst. Curves 60 and 70 represent, respectively the variation with time of the logarithmic counting rate of thermal neutron capture gamma rays following irradiation first with the short burst 58 of fast neutrons and the long burst 68 of fast neutrons.

Preferably the time length of the long burst 68 and the time length of the short burst 58 are fixed lengths: the short burst 58 is 20 $\mu$sec; the long burst is 160 $\mu$sec. A series 59 of first counting gates, namely five counting gates, $G_{1S}$ - $G_{5S}$, are provided following a "short" delay $D_s$ after the short burst 58. A series 69 of second counting gates, namely eight counting gates, $G_{1L}$ - $G_{8L}$ are provided following a "long" delay $D_L$ after the long burst 68. The long burst 68 follows immediately after the last gate $G_{5S}$ of the series 59 of first counting gates. Table I below presents the timing sequence for the bursting, delays and counting gates of the preferred embodiment of the invention. Similar sets of timing gates are used for both the near and far gamma ray detectors.

## TABLE I

| Item | BEGIN TIME (µsec) | DURATION (µsec) |
|---|---|---|
| Short Burst 58 | 0 | 20 |
| Short Delay $D_S$ | 20 | 18 |
| Gate $G_{1S}$ | 38 | 22 |
| Gate $G_{2S}$ | 60 | 28 |
| Gate $G_{3S}$ | 88 | 50 |
| Gate $G_{4S}$ | 138 | 97 |
| Gate $G_{5S}$ | 235 | 153 |
| Long Burst 68 | 388 | 160 |
| Long Delay $D_L$ | 548 | 60 |
| Gate $G_{1L}$ | 608 | 14 |
| Gate $G_{2L}$ | 622 | 18 |
| Gate $G_{3L}$ | 640 | 40 |
| Gate $G_{4L}$ | 680 | 76 |
| Gate $G_{5L}$ | 756 | 125 |
| Gate $G_{6L}$ | 881 | 210 |
| Gate $G_{7L}$ | 1091 | 340 |
| Gate $G_{8L}$ | 1431 | 449 |
| Cycle Time | 1880µsec | |

After 128 cycles of the dual burst timing scheme there is a delay of 3msec (not illustrated) after which a background gate of 15msec is provided to measure the activation count rate of the corresponding detector. The corresponding background count rate is thus determined for the near detector 24 and the far detector 26. These two background count rates may be recorded on the log recorder 44 and used in the estimate of borehole decay rate, $\tau_B$, and formation decay rate, $\tau_F$, as explained below.

Ideally, to obtain the optimum decay curve from which to calculate both decay constants, the neutron burst should be as short as possible. However a neutron generator or "minitron" as described in U.S. patents 2,991,364 and 3,546,512 referenced above cannot operate at its maximum output when driven at short bursts at a low repetition rate, i.e., duty factors less than 5%. The count rate of gamma rays detected a relatively long time from the end of a short burst, which contains mainly the information of the thermal neutron decay in the formation, will be very low and highly affected by background counts. Its measurement would be statistically inaccurate.

However, if the burst is made longer in time in order to increase the minitron output, the precision of the formation tau determination improves, but the count rate increases greatly in the time immediately following the burst. This extremely high count rate requires a large, and consequently unreliable, dead time correction in the signal counting circuits 38 of Figure 1. Such dead time occurs where gamma rays are impinging upon detectors 22 and 24 in great numbers, some of which are occurring essentially at precisely the same time. Dead time corrections are made as a function of total counts on the basis that the more counts per unit time measured, the greater the probability that a certain number of the detected gamma rays occurred at precisely the same time.

Thus, the short burst 58 - long burst 68 regime depicted in Figure 2 according to the invention results in the following advantages.

The short burst-long burst regime of Figure 4 results in a high duty factor (approximately 9%) for the neutron generator. A high duty factor allows the neutron generator to be operated at its maximum output. Thus a short burst may be provided in the bursting/detection regime while simultaneously providing for the neutron generator to be running at its maximum output.

Dual time length bursting of the borehole materials and the formation results in a reduction of the total number of detected gamma rays resulting from absorption of thermal neutrons after the short burst. As indicated above, the borehole materials component predominates in the total signal following the short burst. A reduction of total gamma rays detected in the time following the narrow burst 58 requires only small dead time corrections using practical amplifier/discriminator circuitry in counting circuits 38. Better statistical accuracy of the estimate of the number of gamma rays resulting from the borehole materials is achieved. In a nutshell, a "good" borehole signal is obtained following the short burst.

The total gamma ray count rate resulting from thermal neutron absorption following the long burst is extremely high immediately after the long burst ends. Such a high count rate immediately after the long burst is due to the fact that borehole materials have been "charged-up" to near their saturation level. However a relatively long delay $D_L$ is provided after the long neutron burst 68 so that the total count rate due to both the formation component and the borehole materials component has decayed to a level where large dead time corrections in the counting circuitry 38 may be avoided. During the delay $D_L$, the faster decaying borehole materials decreases sufficiently such that the measured count rate signals measured in the counting gates G1L - G8L are predominately from the formation. In a nutshell, a "good" formation signal is obtained following the long burst.

## Iterative Stripping of Borehole Component and Formation Component from Total Count Rate Measurements

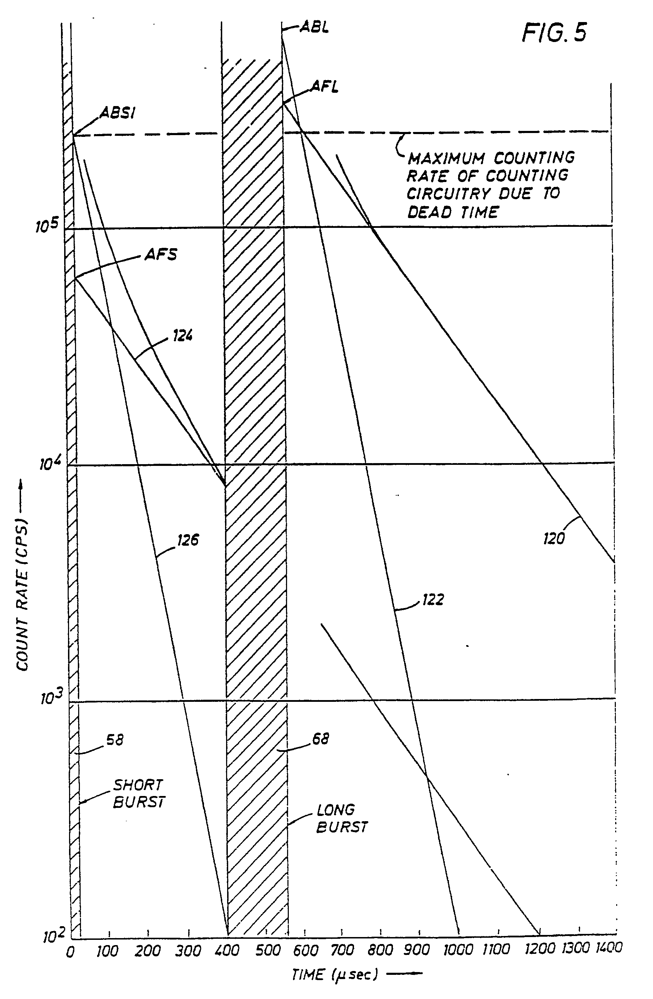

Figure 5 illustrates the method for determining the formation decay signal following the long burst 68 by its initial value AFL and time constant $\tau_F$ and the borehole materials decay signal following the short burst 58 characterized by its initial value ABS and time constant $\tau_B$. The gates GL illustrated in Figure 4 following long burst 68 include gates G1L-G8L. The gates GS include gates G1S-G5S.

The iterative stripping method preferably includes the step of converting count rate information in gates GS and GL to natural logarithmic values so that straight lines may be fitted numerically or graphically as illustrated in Figure 5, but of course exponential functions may be fitted directly to the unconverted count rates of the gates. In any case, a first estimate is made of the decay exponential function of formation gamma rays following the long burst 68. Preferably, only the later occurring gates G5L, G6L, G7L, G8L are used for the first estimate of the straight line 120 (on a logarithmic plot). It is seen from Figures 4 and 5 that the gates G5L-G8L are sufficiently delayed after the end of the long burst to have only a very small component from the borehole because it will generally have predominantly decayed away. Thus, a fit to the data of gates G5L-G8L results in a first estimate of the formation exponential function of the form.

$$f_{FL1}(t'') = (AFL1)\, e^{-t''/\tau_{F1}}$$

where AFL1 is the first estimate of the number of gamma rays occurring in the formation at the end of the long burst 68, $\tau_{F1}$ is the first estimate of the time decay constant of gamma rays resulting from absorption of thermal neutrons in the formation, and $t''$ is a time variable from the end of the long burst.

Because the formation decay component $f_{FL1}(t'')$ created from the long burst will not necessarily have died away completely before the bursting cycle repeats itself (that is before the next burst), the residual from the previous long burst is subtracted from the short burst decay gates GS and also the long burst decay gates GL. The residual from the previous long burst is illustrated in Figure 3F. The residual count rate from the previous long burst can be described as

$$R = (AFL1) \, e^{\dfrac{-(t_1 + t)}{\tau_{F1}}}$$

where $t_1$ is the time from the end of the long burst to the start of the next short burst and t is the time from the start of a new bursting cycle.

Thus, residual free signals GS* and GL* are obtained by subtracting from each gate GS and GL the number of counts in them contributed by R, that is,

$$GS^* = GS - (AFL1) \, e^{\dfrac{-(t_1 + t)}{\tau_{F1}}} ,$$

$$GL^* = GL - (AFL1) \, e^{\dfrac{-(t_1 + t)}{\tau_{F1}}}$$

where the exponential function is evaluated for $t_1$ and t corresponding to each gate position following the start of the cycle.

It is generally sufficient to subtract out only the formation residual component, because for usual short values of borehole materials time constant, the borehole component 122 of Figure 5 will have died away before the bursting-detection cycle repeats itself.

Next, the amplitude of the formation exponential component following the short burst is determined by using the "charge up" of the formation in response to formation bursts of different lengths. Thus, the first estimate of the amplitude of the formation exponential as a result of the short neutron burst is obtained from the relation, as developed previously,

$$AFS1 = AFL1 \, \frac{(1-e^{-t_S/\tau_{F1}})}{(1-e^{-t_L/\tau_{F1}})}$$

where
$t_S$ = the duration of the short burst (preferably 20 μsec)
$t_L$ = the duration of the long burst (preferably 160 μsec),
and AFL1 = the first estimate of the number of gamma rays occurring in the formation following the long burst.

Having determined the value of AFS1, it is assumed that the same time constant $\tau_{F1}$ obtained from the long burst gate GL represents the formation component following the short burst, that is,

$$f_{FS1}(t') = (AFS1) \, e^{-t'/\tau_{F1}}$$

where t' is a time variable from the end of the short burst.

Next, the formation decay count rates resulting from the short burst are subtracted or "stripped" from the residual corrected gates GS*, GL*, that is,

$$GS^{**} = GS^* - AFS1 \, e^{-t'/\tau_{F1}}, \text{ and}$$

$$GL^{**} = GL^* - AFS1 \, e^{-t'/\tau_{F1}}$$

where t' is measured from the end of the short burst to each of the gates.

EP 0 240 372 B1

Now having count rate information, GS**, which is substantially free of the formation decay, an exponential function is fit (a straight line is fit to logarithmic data) to the GS** gates to provide an estimate of borehole tau, $\tau_{B1}$ and the borehole amplitude following the short burst. Straight line 126 of Figure 5 illustrates the first estimate of the borehole component following the short burst 58 on the logarithmic plot. As a result, the borehole component is determined of the form,

$$f_{BS1}(t') = (ABS1) \, e^{-t'/\tau_{B1}}$$

where ABS1 is the first estimate of the number of gamma rays occurring in the borehole at the end of the short burst, $\tau_{B1}$ is the first estimate of the time decay constant of thermal neutrons in the borehole materials, and t' is a time variable measured from the end of the short burst.

Next a first estimate of the borehole materials decay exponential function following the long burst of the form,

$$f_{BL1}(t'') = (ABL1) \, e^{-t''/\tau_{B1}}$$

by estimating ABL1, as explained above, from a thermal neutron (gamma ray) charge-up relation,

$$ABL1 = (ABS1) \, \frac{(1-e^{-t_L/\tau_{B1}})}{(1-e^{-t_S/\tau_{B1}})}$$

where ABL1 is the first estimate of the number of gamma rays occurring in the borehole materials at the end of the long burst and t'' is a time variable measured from the end of the long burst.

Next an estimate of the signal level of the series of gates following the long burst due only to the formation decay of gamma rays following the long burst is obtained by subtracting or "stripping" the count rate signals which result from the borehole decay exponential function $f_{BL1}(t'')$ from the second residual free signals GL**, that is,

$$GL^{***} = GL^{**} - (ABL1) \, e^{-t''/\tau_{B1}}.$$

Although not generally required, the stripped gates GL*** can be corrected for any residual component in the gates following the long burst from the borehole materials following the short burst, that is,

$$GL^{****} = GL^{***} - (ABS1) \, e^{-t'/\tau_{B1}}.$$

Now, GL*** (or GL****, if required) are count rate gates which are substantially free of borehole component.

Next an improved estimate of the decay characteristics of the formation gamma rays following the long burst of the form

$$f_{FL1}^{*}(t'') = (AFL1^{*}) \, e^{-t''/\tau_{F1}^{*}}$$

is obtained from the time gate signals of GL***. Preferably gates G4L-G8L are used with the revised estimated in that the gates used for the estimation may be moved closer to the end of the long burst, because most of

13

the borehole component of the component signal has been stripped out.

Starting with "raw" data, that is uncorrected for residual count rates, GL, and the improved estimate of formation decay time constant $\tau_{F1}{}^*$ and formation component amplitude AFL1*, the procedure starts again as above at the residual R determination. The estimation cycle is repeated with each iteration of the cycle taking an "extra" gate toward the end of the long burst to obtain the revised improved estimate of $\tau_{F1}{}^*$ and AFL1*. If due to excessive count rates following the long burst the gate G1L is not usable, then only gates G2L through G8L are used for determining $\tau_{F1}{}^*$ and AFL1* . The iteration stops where $\tau_F$ and $\tau_B$ do not change more than a predetermined amount and all the gates that can be used following the long burst have been used.

The same procedure for data accumulated in the near detector 24 is performed on data accumulated in the far detector 26. Each decay constant is also transformed by a proportionality constant to obtain a correlative cross-section sigma, $\Sigma = 4545/\tau$. One or more of the variables $\tau_{Bn}$, $\tau_{Bf}$, $\Sigma_{Bn}$, and $\Sigma_{Bf}$, may be determined and recorded as a function of borehole depth on recorder 44 as illustrated in Figure 1 where the subscript B represents borehole materials, n represents near detector and f represents the far detector. Likewise, the variables $\tau_{Fn}$, $\tau_{Ff}$, $\Sigma_{Fn}$, and $\Sigma_{Ff}$, may be recorded where the subscript F represents the formation.

## Claims

1. A method for determining thermal neutron decay characteristics of earth formation surrounding a borehole, comprising the steps of :

irradiating the borehole materials and earth formations with of first burst of fast neutrons; and

detecting count rates of indications of the concentration of thermal neutrons in the formation and in said borehole materials following said first burst of neutrons and generating first signals representative thereof; characterized in that:

said first burst is of a first duration such that, after a first delay from the end of the first burst, the thermal neutron count rate concentration due to borehole materials predominates in the total thermal neutron count rate; and in that the method further comprises the steps of:

irradiating the borehole materials and earth formations with a second burst of fast neutrons;

detecting count rates of indications of the concentration of thermal neutrons in the formation and in said borehole materials following said second burst of neutrons and generating second signals representative thereof;

said second burst being of a second duration different from said first duration, such that, after a second delay from the end of the second burst, the thermal neutron count rate component due to the formation predominates in the total thermal neutron count rate; and

determining from said first and second signals a characteristic of the thermal neutron decay of said formations, $\tau_F$.

2. A method according to claim 1, wherein the duration of said first burst is relatively long as compared to the expected time constant of the borehole materials, $\tau_B$, but being relatively short as compared to the expected time constant of the formation, $\tau_F$, such that after said first delay, the total count rate due to the borehole materials and to the formation is approximately equal to the maximum counting rate of said detecting means, and the duration of second burst is relatively long as compared to the time constant of the formation, $\tau_F$, such that after said second delay, the total count rate due to the borehole materials and to the formation is approximately equal to the maximum counting rate of said detecting means.

3. The method according to any one of claims 1 or 2, further comprising the step of

determining from said first and second signals a characteristic of the thermal neutron decay of said borehole material, $\tau_B$.

4. The method according to claim 3, further comprising the steps of

determining the correlative capture cross-section of the borehole materials, $\Sigma_B = 4545/\tau_B$, and

determining the correlative capture cross-section of the formation, $\Sigma_F = 4545/\tau_F$.

5. The method according to any one of the preceeding claims, wherein

said first signals are gamma ray count rate signals accumulated in a first series of time gates following said first delay, said first series of time gates beginning with a gate of a first narrow width, with each successive gates having a wider width than its preceeding gate, and

said second signals are gamma ray count rate signals accumulated in a second series of time gates following said second delay, said second series of time gates beginning with a gate of a second narrow width, with each successive gates having a wider width than its preceeding gate.

6. The method according to claim 5, wherein

said gates of said first series of time gates are contiguous, and

said gates of said second series of time gates are contiguous.

7. The method according to claim 6, wherein

said second burst of neutrons is provided immediatly following the last gate of said first time series of time gates.

8. The method according to any one of the preceeding claims, wherein

said first burst is of a duration of about 20 microseconds,

said first delay after the end of said first burst is 18 microseconds,

said second burst is of a duration of about 160 microseconds,

said second delay after the end of said second burst is 60 microseconds.

9. The method according to any one of claims 5 to 8, wherein said steps of determining the characteristics $\tau_F$ and $\tau_B$ comprise the substeps of

(a) estimating the constant $\tau_F$ of a formation decay exponential resulting from said second burst from said second signals,

(b) stripping count rate signals from said first count rate signals of the formation decay exponential having said constant $\tau_F$ resulting from said first burst to produce stripped first count rate signals,

(c) estimating the constant $\tau_B$ of a borehole decay exponential resulting from said first burst from said stripped first count rate signals,

(d) stripping count rate signals from said second count rate signals of a borehole dacay exponential having said constant $\tau_B$ resulting from said second burst to produce stripped second count rate signals,

(e) re-estimating the constant $\tau_F$ of said formation decay exponential resulting from said second burst from said second count rate signals, and

(f) repeating steps (b) trough (e) until the constants $\tau_F$ and $\tau_B$ change by less than a predetermined amount from one iteration to the next.

10. The method according to any one of claims 5 to 8, wherein

said first burst period, first signals detection period, second burst, second signals detection period is repeated forming a burst-detection series,

(a) determining a first estimate of the decay characteristics following said second burst with an exponential function of the form

$$f_{FL1} \left( t'' \right) = (AFL1) \, e^{-t''/\tau_{F1}} \quad ,$$

from said second series of time gate signals GL, where AFL1 is the first estimate of the number of gamma rays occurring in the formation at the end of said second burst, $\tau_{f1}$ is the first estimate of the time decay constant of said gamma rays in the formation, and t" is a time variable from the end of the second burst,

(b) determining first residual count rate signals in said first series of time gates GS and in said second series of time gates GL which result from the formation decay exponential $f_{FL1}(t)$ of the previous second burst formation decay in the burst-detection series and subtracting said first residual count rate signals from said GS signals and said GL signals to produce first residual free signals GS* and GL*;

(c) determining a first estimate of the decay characteristc of formation gamma rays following said short burst with an exponential funtion of the form

$$f_{FS1}(t') = (AFS1) \, e^{-t'/\tau_{F1}}$$

from a gamma ray "charge-up" relation,

$$AFS1 = (AFL1) \, \frac{(1 - e^{-t_S/\tau_{F1}})}{(1 - e^{-t_L/\tau_{F1}})}$$

where $t_S$ is the time length of said first burst, $t_L$ is the time length of said second burst, AFS1 is the first estimate of the number of gamma rays occurring in the formation at the end of the first burst, and t' is a time variable from the end of the short burst,

(d) determining second residual count rate signals in said first series of time gates and in said second series of time gates which result from the formation decay expontial $f_{FS1}(t')$ resulting from the first burst of neutrons and subtracting said second residual count rate signals from said first residual free signals GS* and GL* to produce second residual free signals GS** and GL**,

(e) determining from said GS** signals a first estimate of the decay characteristic of borehole gamma rays following said first burst with an exponential function of the form,

$$f_{BS1}(t') = (ABS1)\ e^{-t'/\tau_{B1}}$$

where ABS1 is the first estimate of the number of gamma rays occurring in the borehole at the end of said first burst, $\tau_{B1}$, is the first estimate of the time decay constant of said gamma rays in the borehole materials , and t' is a time variable from the end of the first burst,

(f) determining a first estimate of the borehole decay exponential function following said second burst of the form,

$$f_{BL1}^{*}(t'') = (ABL1)e^{-t''/\tau_{B1}}$$

from a gamma ray charge-up relation,

$$ABL1 = (ABS1)\ \frac{(1-e^{-t_L/\tau_{B1}})}{(1-e^{-t_S/\tau_{B1}})}$$

where ABL1 is the first estimate of the number of gamma rays occurring in the borehole materials at the end of the second burst,

(g) determining an estimate of the signal level of said second series of tine gates of gamma rays following the second burst by subtracting the count rate signals which result from said borehole decay exponential function $f_{BL1}(t'')$ from said second residual free signals GL** to produce a revised series of time gate signals GL***,

(h) determining a revised estimate of the decay characteristics of gamma rays following said second burst with an exponential function of the form

$$f_{FL1}^{*}(t'') = AFL1^{*}e^{-t''/\tau_{F1}^{*}}$$

from said revised series of time gate signals GL***, and

(i) repeating sub-steps (b) through (h) until $\tau_F$ and $\tau_B$ do not change more than a predetermined amount from one repetition of steps (b) through (h) to the next.

11. The method according to claim 10 wherein said second series of time gates begins with a gate G1L of a narrow width each successive gate having a wider width than its preceeding gate, and ends with gate G8L where 8 is the number of gates and where

in said sub-step (a) of determining said first estimate of said formation decay exponential, only a predetermined set of later gates are used in estimating AFL1 and $\tau_F$, and where

in said sub-step (h) of determining said revised estimate of said formation decay exponential, using at least one additional one of said gates closer to the end of said long burst in re-estimating AFL and $\tau_F$.

12. The method according to claim 10 wherein

said count rate signals of said time gate signals GL and GS are converted to natural logarithm signals by taking the natural logarithm of the count rate of each time gate, and

said estimate of AFL and τF and ABS and τB are determined by fitting a straight line respectively to said logarithm signals GL and GS where the slope of said straight line is the time constant of the exponential function and the intercept after the end of the respective burst is the initial value of the exponential function.

13. The method according to claim 12, further comprising the step of

determining the background gamma ray count rates occurring naturally in said borehole materials and in said formation and occurring through activation of said borehole materials and in said formation by repeated neutron pulsing, and substracting said background gamma ray count from said first and second gamma ray count rate signals as a function of time, and

determining background corrected first and second logarithmic functions of time.

14. The method according to claim 1, wherein said irradiating step takes place at a first location in said borehole, said detecting step following said first burst is carried out at a second location in said borehole, and said detecting step following said second burst is carried out at a third given location in said borehole, said first, second and third locations being longitudinally spaced from each other.

15. A logging system for determining thermal neutron decay characteristics of earth formation surrounding a borehole comprising :

neutron generating means for irradiation the borehole materials and earth formations with a first burst of fast neutrons;

means for detecting count rates of indications of the concentration of thermal neutrons in the formation and in said borehole materials following said first burst of neutrons and generating first signals representative thereof; characterized in that:

said first burst is of a first duration such that, after a first delay from the end of the first burst, the thermal neutron count rate concentration due to borehole materials predominates in the total thermal neutron count rate;

said neutron generating means is adapted to irradiate the borehole materials and earth formations with a second burst of fast neutrons;

said detecting means is adapted to detect count rates of indications of the concentration of thermal neutrons in the formation and in said borehole materials following said second burst of neutrons and to generate second signals representative thereof;

said second burst being of a second duration different from said first duration, such that, after a second delay form the end of the second burst, the thermal neutron count rate component due to the formation predominates in the total thermal neutron concentration; and said system further comprises:

means for determining, from said first and second signals, a characteristic of the thermal neutron decay of said formations, $\tau_F$.

16. A logging system according to claim 15, wherein

said first signals are gamma ray count rate signals GS accumulated in a first series of time gates following said first delay, said first series of time gates beginning with a gate of a first narrow width, with each successive gates having a wider width than its preceeding gate, and

said second signals are gamma ray count rate signals GL accumulated in a second series of time gates following said second delay, said second series of time gates beginning with a gate of a second narrow width, with each successive gates having a wider width than its preceeding gate.

17. A logging system according to any one of claims 15 or 16, further comprising

means for determining from said first and second signals the thermal decay constant of said borehole material, $\tau_B$.

18. A logging system according to any of claims 15 to 17, wherein

said first burst is of a duration of about 20 microseconds,

said first delay after the end of said first burst is 18 microseconds,

said second burst is of a duration of about 160 microseconds,

said second delay after the end of said second burst is 60 microseconds.

19. A logging system according to claim 15, wherein said detecting means comprises two detectors longitudinally spaced from each other and from said neutron generating means.

## Patentansprüche

1. Ein Verfahren zum Bestimmen der thermischen Neutronenabklingkennwerte von ein Bohrloch umgebenden Erdformationen, umfassend die Schritte:

Bestrahlen der Bohrlochmaterialien und Erdformationen mit einem ersten Burst schneller Neutronen, und

Erfassen von Zählraten von Indikationen der Konzentration von thermischen Neutronen in der Formation und in den Bohrlochmaterialien nach dem ersten Neutronen-Burst und Erzeugen erster dafür repräsentativer Signale, dadurch gekennzeichnet, daß

der erste Burst eine erste Dauer derart aufweist, daß nach einer ersten Verzögerungszeit vom Ende des ersten Bursts die thermische Neutronenzählratenkonzentration, herrührend von Bohrlochmaterialien, in der gesamten thermischen Neutronenzählrate prädominant ist, und daß das Verfahren ferner die Schritte umfaßt:

Bestrahlen der Bohrlochmaterialien und Erdformationen mit einem zweiten Burst schneller Neutronen,

Erfassen von Zählraten von Indikationen der Konzentration thermischer Neutronen in der Formation und in den Bohrlochmaterialien nach dem zweiten Neutronen-Burst und Erzeugen zweiter dafür repräsentativer Signale,

wobei der zweite Burst eine zweite Dauer, abweichend von der ersten Dauer, aufweist derart, daß nach einer zweiten Verzögerungszeit vom Ende des zweiten Bursts die thermische Neutronenzählratenkomponente, herrührend von der Formation, in der gesamten thermischen Neutronenzählrate prädominiert, und

Bestimmen aus dem ersten und dem zweiten Signal eines thermischen Neutronenabklingkennwertes der Formationen, $\tau_F$.

2. Ein Verfahren nach Anspruch 1, bei dem die Dauer des ersten Bursts relativ lang ist im Vergleich mit der erwarteten Zeitkonstante der Bohrlochmaterialien $\tau_B$, jedoch relativ kurz im Vergleich mit der erwarteten Zeitkonstante der Formation $\tau_F$ ist derart, daß nach der ersten Verzögerungszeit die Gesamtzählrate, herrührend von den Bohrlochmaterialien und der Formation, annähernd gleich der maximalen Zählrate der Erfassungsmittel ist, und die Dauer des zweiten Bursts relativ lang ist im Vergleich mit der Zeitkonstante der Formation $\tau_F$ derart, daß nach der zweiten Verzögerungszeit die Gesamtzählrate, herrührend von den Bohrlochmaterialien und der Formation, annähernd gleich der maximalen Zählrate der Erfassungsmittel ist.

3. Das Verfahren nach einem der Ansprüche 1 oder 2, ferner umfassend

den Schritt des Bestimmens eines thermischen Neutronenabklingkennwerts der Bohrlochmaterialien $\tau_B$ aus den ersten und zweiten Signalen.

4. Das Verfahren nach Anspruch 3, ferner umfassend

die Schritte des Bestimmens des korrelativen Einfangquerschnitts der Bohrlochmaterialien $\Sigma_B = 4545/\tau_B$, und

des Bestimmens des korrelativen Einfangquerschnitts der Formation $\Sigma_F = 4545/\tau_F$.

5. Das Verfahren nach einem der vorangehenden Ansprüche, bei dem

die ersten Signale Gammastrahlungszählratesignale sind, akkumuliert in einer ersten Serie von Zeitfenstern nach der ersten Verzögerungszeit, welche erste Serie von Zeitfenstern mit einem Fenster einer ersten geringen Breite beginnt, und wobei jedes folgende Fenster eine größere Breite als das ihm vorangehende Fenster aufweist, und

die zweiten Signale Gammastrahlungszählratesignale sind, akkumuliert in einer zweiten Serie von Zeitfenstern nach der zweiten Verzögerungszeit, welche zweite Serie von Zeitfenstern mit einem Fenster einer zweiten geringen Breite beginnt, und jedes folgende Fenster eine größere Breite als das ihm vorangehende Fenster aufweist.

6. Das Verfahren nach Anspruch 5, bei dem

die Fenster der ersten Serie von Zeitfenstern aneinandergrenzend sind, und

die Fenster der zweiten Serie von Zeitfenstern aneinandergrenzend sind.

7. Das Verfahren nach Anspruch 6, bei dem

der zweite Neutronen-Burst unmittelbar nach dem letzten Fenster der ersten Zeitserie von Zeitfenstern vorgesehen ist.

8. Das Verfahren nach einem der vorangehenden Ansprüche, bei dem

der erste Burst eine Dauer von etwa 20 Mikrosekunden aufweist,

die erste Verzögerungszeit nach dem Ende des ersten Bursts 18 Mikrosekunden ist,

der zweite Burst eine Dauer von etwa 160 Mikrosekunden aufweist,

die zweite Verzögerungszeit nach dem Ende des zweiten Bursts 60 Mikrosekunden ist.

9. Das Verfahren nach einem der Ansprüche 5 bis 8, bei dem die Schritte des Bestimmens der Kennwerte $\tau_F$ und $\tau_B$ die Unterschritte umfassen:

(a) Abschätzen der Konstante $\tau_F$ eines Formationsabklingexponenten, herrührend von dem zweiten Burst, aus den zweiten Signalen,

(b) Abziehen von Zählratesignalen aus den ersten Zählratesignalen des Formationsabklingexponenten mit der genannten Konstanten $\tau_F$, herrührend von dem ersten Burst, zum Erzeugen bereinigter erster Zählratesignale,

(c) Abschätzen der Konstanten $\tau_B$ eines Bohrlochabklingexponenten, herrührend von dem ersten Burst, aus den bereinigten ersten Zählratesignalen,

(d) Abziehen von Zählratesignalen von den zweiten Zählratesignalen eines Bohrlochabklingexponenten

mit der Konstanten $\tau_B$, herrührend von dem zweiten Burst, zum Erzeugen bereinigter zweiter Zählratesignale,

(e) erneutes Abschätzen der Konstanten $\tau_F$ des Formationsabklingexponenten, herrührend von dem zweiten Burst, aus den bereinigten zweiten Zählratesignalen, und

(f) Wiederholen der Schritte (b) bis (e) bis die Konstanten $\tau_F$ und $\tau_B$ sich nur um weniger als eine vorgegebene Größe von einer Iteration zur nächsten ändern.

10. Das Verfahren nach einem der Ansprüche 5 bis 8, bei dem

die erste Burst-Periode, die erste Signalerfassungsperiode, der zweite Burst, die zweite Signalerfassungsperiode wiederholt werden zur Bildung einer Burst-Erfassungs-Serie

(a) Bestimmen einer ersten Abschätzung der Abklingkennwerte nach dem zweiten Burst mit einer Exponentialfunktion der Form

$$f_{FL1}(t'') = (AFL1)\, e^{-t''/\tau_{F1}}$$

aus der zweiten Serie von Zeitfenstersignalen GL, wobei AFL1 die erste Abschätzung der Anzahl von Gammastrahlen ist, die in der Formation am Ende des zweiten Bursts auftreten, $\tau_{F1}$ die erste Abschätzung der Abklingzeitkonstanten der Gammastrahlen in der Formation ist, und t'' eine Zeitvariable vom Ende des zweiten Bursts ist,

(b) Bestimmen erster Restzählratesignale in der ersten Serie von Zeitfenstern GS und in der zweiten Serie von Zeitfenstern GL, die herrühren von dem Formationsabklingexponenten $f_{FL1}(t)$ des vorhergehenden zweiten Burst-Formationsabklingens in der Burst-Erfassungs-Serie, und Subtrahieren der ersten verbleibenden Zählratesignale von den GS Signalen und den GL Signalen zum Erzeugen erster verbleibender freier Signale GS* und GL*,

(c) Bestimmen einer ersten Abschätzung des Abklingkennwerts der Formations-Gammastrahlen nach dem kurzen Burst mit einer Exponentialfunktion der Form

$$f_{FS1}(t') = (AFS1)\, e^{-t'/\tau_{F1}}$$

aus einer Gammastrahlen-"Aufladebeziehung"

$$AFS1 = (AFL1)\, \frac{(1-e^{-t_S/\tau_{F1}})}{(1-e^{-t_L/\tau_{F1}})}$$

wobei $t_S$ die Zeitlänge des ersten Burst ist, $t_L$ die Zeitlänge des zweiten Bursts ist, AFS1 die erste Abschätzung der Anzahl von Gammastrahlen ist, die in der Formation am Ende des ersten Burst auftreten, und t' eine Zeitvariable vom Ende des kurzen Burst ist,

(d) Bestimmen zweiter verbleibender Zählratesignale in der ersten Serie von Zeitfenstern und in der zweiten Serie von Zeitfenstern, welche herrühren von dem Formationsabklingexponenten $f_{FS1}(t')$, herrührend von dem ersten Neutronen-Burst, und Subtrahieren der zweiten verbleibenden Zählratesignale von den ersten verbleibenden freien Signalen GS* und GL* zum Erzeugen zweiter verbleibender freier Signale GS** und GL**,

(e) Bestimmen aus den GS** Signalen einer ersten Abschätzung des Abklingkennwerts von Bohrloch-Gammastrahlen nach dem ersten Burst mit einer Exponentialfunktion der Form

$$f_{BS1}(t') = (ABS1)\, e^{-t'/\tau_{B1}}$$

worin ABS1 die erste Abschätzung der Anzahl von Gammastrahlen ist, die in dem Bohrloch am Ende des ersten Burst auftreten, $\tau_{B1}$ die erste Abschätzung der Abklingzeitkonstante der Gammastrahlen in den Bohrlochmaterialien ist, und t' eine Zeitvariable vom Ende des ersten Burst ist,

(f) Bestimmen einer ersten Abschätzung der Bohrlochabklingexponentialfunktion nach dem zweiten Burst in der Form

$$f_{BL1}{}^{*}(t'') = (ABL1)e^{-t''/\tau_{B1}}$$

aus einer Gammastrahlen-Aufladebeziehung

$$ABL1 = (ABS1)\frac{(1-e^{-t_L/\tau_{B1}})}{(1-e^{-t_S/\tau_{B1}})}$$

worin ABL1 die erste Abschätzung der Anzahl von Gammastrahlen ist, die in den Bohrlochmaterialien am Ende des zweiten Burst auftreten,

(g) Bestimmen einer Abschätzung des Signalpegels der zweiten Serie von Zeitfenstern von Gammastrahlen nach dem zweiten Burst durch Subtrahieren der Zählratesignale, die aus der Bohrlochabklingexponentialfunktion $f_{BL1}(t'')$ von den zweiten verbleibenden freien Signalen GL** zum Erzeugen einer revidierten Serie von Zeitfenstersignalen GL***,

(h) Bestimmen einer revidierten Abschätzung der Abklingkennwerte von Gammastrahlen nach dem zweiten Burst mit einer Exponentialfunktion der Form

$$f_{FL1}{}^{*}(t'') = AFL1{}^{*}e^{-t''/\tau^{*}_{F1}}$$

aus der revidierten Serie von Zeitfenstersignalen GL***, und

(i) Wiederholen der Unterschritte (b) bis (h) bis $\tau_F$ und $\tau_B$ sich nicht mehr als um eine vorgegebene Größe von einer Wiederholung der Schritte (b) bis (h) zur nächsten ändern.

11. Das Verfahren nach Anspruch 10, bei dem die zweite Serie von Zeitfenstern mit einem Fenster G1L einer geringeren Breite beginnt, wobei aufeinanderfolgende Fenster eine jeweils größere Breite als das ihnen vorangehende Fenster aufweisen, und mit Fenster G8L endet, worin 8 die Anzahl der Fenster ist, und

bei dem in dem Unterschritt (a) der Bestimmung der ersten Abschätzung des Formationsabklingexponenten nur ein vorbestimmter Satz von späteren Fenstern bei der Abschätzung AFL1 und $\tau_F$ verwendet wird, und

worin in dem Unterschritt (h) der Bestimmung der revidierten Abschätzung des Formationsabklingexponenten bei der erneuten Abschätzung AFL und $\tau_F$ mindestens ein zusätzliches Fenster verwendet wird, das dem Ende des langen Bursts näher ist.

12. Das Verfahren nach Anspruch 10, bei dem

die Zählratesignale der Zeitfenstersignale GL und GS in Signale natürlichen Logarithmus' umgesetzt werden durch Verwenden des natürlichen Logarithmus' der Zählrate jedes Zeitfensters, und

die Abschätzung von AFL und $\tau F$ sowie ABS und $\tau B$ bestimmt werden durch Anpassen einer geraden Linie an die logarithmischen Signale GL bzw. GS, wobei die Steigung der geraden Linie die Zeitkonstante der Exponentialfunktion ist, und der Schnittpunkt nach dem Ende des entsprechenden Burst der Anfangswert der Exponentialfunktion ist.

13. Das Verfahren nach Anspruch 12, ferner umfassend den Schritt

der Bestimmung der Hintergrund-Gammastrahlen-Zählraten, welche natürlicherweise in den Bohrlochmaterialien und in der Formation auftreten, und durch Aktivierung der Bohrlochmaterialien und der Formation durch wiederholtes Neutronenpulsieren auftreten, und Subtrahieren der Hintergrund-Gammastrahlen-Zählung von den ersten und zweiten Gammastrahlen-Zählratesignalen als eine Funktion der Zeit, und

Bestimmen der bezüglich des Hintergrundes korrigierten ersten und zweiten logarithmischen Funktionen der Zeit.

14. Das Verfahren nach Anspruch 1, bei dem der Bestrahlungsschritt an einer ersten Stelle in dem Bohrloch erfolgt, der Erfassungsschritt nach dem ersten Burst an einer zweiten Stelle in dem Bohrloch ausgeführt wird, und der dem zweiten Burst folgende Erfassungsschritt an einer dritten gegebenen Stelle in dem Bohrloch ausgeführt wird, welche ersten, zweiten und dritten Stellen im Längsabstand voneinander sind.

15. Ein Logsystem zum Bestimmen thermischer Neutronenabklingkennwerte von ein Bohrloch umgebenden Erdformationen, umfassend: ·

Neutronenerzeugungsmittel für die Bestrahlung der Bohrlochmaterialien und Erdformationen mit einem ersten Burst schneller Neutronen,

Mittel zum Erfassen von Zählraten von Indikationen der Konzentration thermischer Neutronen in der Formation und in den Bohrlochmaterialien nach dem ersten Neutronen-Burst und zum Erzeugen erster dafür repräsentativer Signale, dadurch gekennzeichnet, daß

der erste Burst eine erste Dauer derart besitzt, daß nach einer ersten Verzögerungszeit vom Ende des ersten Burst die thermische Neutronenzählratenkonzentration, zurückzuführen auf Bohrlochmaterialien, in der gesamten thermischen Neutronenzählrate prädominiert,

daß die Neutronenerzeugungsmittel ausgebildet sind zum Bestrahlen der Bohrlochmaterialien und Erdformationen mit einem zweiten Burst schneller Neutronen,

daß die Erfassungsmittel ausgebildet sind zum Erfassen von Zählraten von Indikationen der Konzentration thermischer Neutronen in der Formation und in den Bohrlochmaterialien nach dem zweiten Neutronen-Burst und zum Erzeugen zweiter dafür repräsentativer Signale,

daß der zweite Burst eine zweite Dauer aufweist, abweichend von der ersten Dauer derart, daß nach einer zweiten Verzögerungszeit vom Ende des zweiten Burst die thermische Neutronenzählratekomponente, beruhend auf der Formation, in der gesamten thermischen Neutronenkonzentration prädominiert, und daß das System ferner umfaßt:

Mittel für das Bestimmen aus den ersten und zweiten Signalen eines thermischen Neutronenabklingkennwerts $\tau_F$ der Formationen.

16. Ein Logsystem nach Anspruch 15, bei dem

die ersten Signale Gammastrahlenzählratesignale GS sind, akkumuliert in einer ersten Serie von Zeitfenstern nach der ersten Verzögerungszeit, wobei die erste Serie von Zeitfenstern mit einem Zeitfenster einer ersten geringen Breite beginnt, und jedes nachfolgende Fenster eine Breite aufweist, die größer ist als die des ihm vorangehenden Fensters, und

bei dem die zweiten Signale Gammastrahlenzählratesignale GL sind, akkumuliert in einer zweiten Serie von Zeitfenstern nach der zweiten Zeitverzögerung, welche zweite Serie von Zeitfenstern mit einem Fenster einer zweiten geringen Breite beginnt, und jedes nachfolgende Fenster eine Breite aufweist, die größer ist als die des ihm vorangehenden Fensters.

17. Ein Logsystem nach einem der Ansprüche 15 oder 16, ferner umfassend

Mittel für das Bestimmen der thermischen Abklingkonstante der Bohrlochmaterialien $\tau_B$ aus den ersten und zweiten Signalen.

18. Ein Logsystem nach einem der Ansprüche 15 bis 17, bei dem

der erste Burst eine Dauer von etwa 20 Mikrosekunden besitzt,

die erste Verzögerungszeit nach dem Ende des ersten Burst 18 Mikrosekunden beträgt,

der zweite Burst eine Dauer von etwa 160 Mikrosekunden besitzt und

die zweite Verzögerungszeit nach dem Ende des zweiten Burst 60 Mikrosekunden beträgt.

19. Ein Logsystem nach Anspruch 15, bei dem die Erfassungsmittel zwei Detektoren umfassen, die im Längsabstand voneinander und von den Neutronenerzeugungsmitteln angeordnet sind.

## Revendications

1. Procédé pour déterminer les caractéristiques de désintégration des neutrons thermiques d'une formation terrestre entourant un puits de forage, comprenant les étapes :

d'irradiation des matériaux du puits de forage et des formations terrestres au moyen d'une première salve de neutrons rapides ; et

de détection des rapports de comptage des indications de la concentration des neutrons thermiques dans la formation et dans lesdits matériaux du puits de forage suivant ladite première salve de neutrons et générant des premiers signaux représentatifs de la concentration ; caractérisé en ce que :

ladite première salve est d'une première durée telle que, après un premier retard à partir de la fin de la première salve, la concentration du rapport de comptage des neutrons thermiques due aux matériaux du puits de forage prédomine dans le rapport de comptage total des neutrons thermiques ; et en ce que la méthode comprend en outre les étapes :

d'irradiation des matériaux du puits de forage, et des formations terrestres, avec une seconde salve de neutrons rapides ;

de détection des rapports de comptage des indications de la concentration des neutrons thermiques dans la formation et dans lesdits matériaux du puits de forage suivant ladite seconde salve de neutrons et générant des seconds signaux représentatifs de la concentration ;

ladite seconde salve étant d'une seconde durée, différente de ladite première durée telle que, après un second retard à partir de la fin de la seconde salve, la composante du rapport de comptage des neutrons thermiques due à la formation prédomine dans le rapport de comptage total des neutrons thermiques ; et

de détermination, à partir desdits premiers et seconds signaux, d'une caractéristique de la désintégration des neutrons thermiques desdites formations, $\tau_F$.

2. Procédé selon la revendication 1, dans lequel la durée de ladite première salve est relativement longue par rapport à la constante de temps attendue pour les matériaux du puits de forage, $\tau_B$, mais relativement courte par rapport à la constante de temps attendue pour la formation, $\tau_F$, de telle sorte qu'après le premier retard, le rapport de comptage total dû aux matériaux du puits de forage et de la formation est approximativement égal au rapport de comptage maximal desdits moyens de détection, et la durée de la seconde salve est relativement longue par rapport à la constante de temps de la formation, $\tau_F$, de telle sorte qu'après un second retard, le rapport de comptage total dû aux matériaux du puits de forage et à la formation est approximativement égal au rapport de comptage maximal desdits moyens de détection.

3. Méthode selon l'une quelconque des revendications 1 ou 2, comprenant en outre l'étape de :

détermination, à partir desdits premiers et seconds signaux, d'une caractéristique de la désintégration des neutrons thermiques dudit matériau du puits de forage, $\tau_B$.

4. Procédé selon la revendication 3, comprenant en outre les étapes de :

détermination de la section efficace d'absorption corrélative des matériaux constituant le puits de forage, $\Sigma_B = 4545/\tau_B$ ; et

détermination de la section efficace d'absorption corrélative de la formation $\Sigma_F = 4545/\tau_F$.

5. Procédé selon l'une quelconque des revendications précédentes, dans lequel :

lesdits premiers signaux sont des signaux de rapport de comptage de rayons gamma, accumulés dans une première série de portes de temps suivant ledit premier retard, et ladite première série de portes de temps commençant par une porte d'une première largeur peu importante, chacune des portes suivantes ayant une largeur plus grande que la porte qui la précède ; et

lesdits seconds signaux sont des signaux de rapport de comptage de rayons gamma accumulés dans une seconde série de portes de temps suivant ledit second retard, ladite seconde série de portes de temps commençant par une porte d'une seconde largeur peu importante, chacune des portes suivantes ayant une largeur plus grande que la porte qui la précède.

6. Procédé selon la revendication 5, dans lequel :

lesdites portes de ladite première série de portes de temps sont contiguës ; et

lesdites portes de ladite seconde série de portes de temps sont contiguës.

7. Procédé selon la revendication 6, dans lequel :

ladite seconde salve de neutrons est fournie immédiatement après la dernière porte de ladite première série de portes de temps.

8. Procédé selon l'une quelconque des revendications précédentes, dans lequel :

ladite première salve est d'une durée d'environ 20 microsecondes ;

ledit premier retard à partir de la fin de ladite première salve est de 18 microsecondes ;

ladite seconde salve est d'une durée d'environ 160 microsecondes ;

ledit second retard à partir de la fin de ladite seconde salve est de 60 microsecondes.

9. Procédé selon l'une quelconque des revendications 5 à 8, dans lequel lesdites étapes de détermination des caractéristiques, $\tau_F$ et $\tau_B$, comprennent les étapes intermédiaires :

(a) d'estimation de la constante $\tau_F$ d'une exponentielle de désintégration de la formation résultant de ladite seconde salve à partir desdits seconds signaux ;

(b) extraction des signaux de rapport de comptage à partir desdits premiers signaux de rapport de comptage de l'exponentielle de désintégration de la formation ayant ladite constante $\tau_F$ résultant de ladite première salve, pour produire des premiers signaux de rapport de comptage épurés ;

(c) estimation de la constante $\tau_B$ de l'exponentielle de désintégration d'un puits de forage résultant de ladite première salve à partir desdits premiers signaux de fréquence de comptage réduits ;

(d) extraction des signaux de rapport de comptage à partir desdits seconds signaux de rapport de comptage de l'exponentielle de désintégration d'un puits de forage ayant ladite constante $\tau_B$ résultant de ladite seconde salve, pour produire des seconds signaux de rapport de comptage réduits ;

(e) ré-estimation de la constante $\tau_F$ de ladite exponentielle de désintégration de la formation résultant de

22

ladite seconde salve à partir desdits seconds signaux de rapport de comptage ; et

(f) répétition des étapes (b) à (e) jusqu'à ce que les constantes $\tau_F$ et $\tau_B$ changent de moins d'une valeur prédéterminée à partir d'une opération et de l'opération suivante.

10. Procédé selon l'une quelconque des revendications 5 à 8, dans lequel :

ladite première période de salve, lesdites première période de détection des signaux, seconde salve, seconde période de détection des signaux sont répétées, formant une série salve-détection ;

(a) déterminant une première estimation des caractéristiques de désintégration suivant ladite seconde salve, au moyen d'une fonction exponentielle de la forme :

$$f_{FL1}(t'') = (AFL1)\ e^{-t''/\ \tau_{F1}}$$

à partir de ladite seconde série de signaux de portes de temps GL, où AFL1 est la première estimation du nombre de rayons gamma apparaissant dans la formation à la fin de ladite seconde salve, $\tau_{F1}$ est la première estimation de la constante de temps de désintégration desdits rayons gamma dans la formation, et t″ est une variable de temps à partir de la fin de la seconde salve ;

(b) déterminant les premiers signaux de rapport de comptage résiduels dans ladite première série de portes de temps GS et dans ladite seconde série de portes de temps GL qui résultent de l'exponentielle de désintégration $f_{FL1}(t)$ de la formation de la désintégration de la formation de la précédente seconde salve dans la série salve-détection et soustrayant lesdits premiers signaux de rapport de comptage résiduels desdits signaux GS et desdits signaux GL de manière à produire les premiers signaux résiduels libres GS* et GL* ;

(c) déterminant une première estimation de la caractéristique de désintégration des rayons gamma de la formation suivant ladite salve courte, au moyen d'une fonction exponentielle de la forme :

$$f_{FS1}(t') = (AFS1)\ e^{-t'/\ \tau_{F1}},$$

à partir d'une relation de "chargement" des rayons gamma,

$$AFS1 = (AFL1)\ \frac{(1-e^{-t_S/\ \tau_{F1}})}{(1-e^{-t_L/\ \tau_{F1}})},$$

où $t_S$ est la longueur de temps de ladite première salve, $t_L$ est la longueur de temps de ladite seconde salve, AFS1 est la première estimation du nombre de rayons gamma apparaissant dans la formation à la fin de la première salve, et t' est une variable de temps à partir de la fin de la salve courte ;

(d) déterminant les seconds signaux résiduels de rapport de comptage dans ladite première série de portes de temps et dans ladite seconde série de portes de temps qui résultent de l'exponentielle de désintégration $f_{FS1}(t')$ de la formation résultant de la première salve de neutrons, et soustrayant lesdits seconds signaux résiduels de rapport de comptage desdits premiers signaux résiduels libres GS* et GL* de manière à produire les seconds signaux résiduels libres GS** et GL** ;

(e) déterminant à partir desdits signaux GS** une première estimation de la caractéristique de désintégration des rayons gamma du puits de forage suivant ladite première salve, au moyen d'une fonction exponentielle de la forme :

$$f_{BS1}(t') = (ABS1)\ e^{-t'/\ \tau_{F1}},$$

où ABS1 est la première estimation du nombre de rayons gamma apparaissant dans le puits de forage à la fin de ladite première salve, $\tau_{B1}$ est la première estimation de la constante de temps de désintégration desdits rayons gamma dans les matériaux du puits de forage, et t' est une variable de temps à partir de la fin de la première salve ;

(f) déterminant une première estimation de la fonction exponentielle de la désintégration du puits de forage à la suite de ladite seconde salve, sous la forme :

$$f_{BL1}*(t'') = (ABL1) \, e^{-t''/\, \tau_{B1}},$$

à partir d'une relation de "chargement" des rayons gamma,

$$ABL1 = (ABS1) \, \frac{(1-e^{-t_L/\, \tau_{B1}})}{(1-e^{-t_S/\, \tau_{B1}})},$$

où ABL1 est la première estimation du nombre des rayons gamma se trouvant dans les matériaux du puits de forage à la fin de la seconde salve ;

(g) déterminant une estimation du niveau du signal de ladite seconde série de portes de temps des rayons gamma à la suite de la seconde salve, en soustrayant les signaux de rapport de comptage qui résultent de ladite fonction exponentielle de désintégration du puits de forage $f_{BL1}$ (t'') à partir desdits seconds signaux résiduels libres GL** pour produire une série révisée de signaux de portes de temps GL*** ;

(h) déterminant une estimation révisée des caractéristiques de désintégration des rayons gamma à la suite de ladite seconde salve au moyen d'une fonction exponentielle de la forme :

$$f_{FL1}*(t'') = AFL1* \, e^{-t''/\, \tau_{F1}},$$

à partir de ladite série révisée des signaux GL*** de portes de temps ; et

(i) répétant les étapes intermédiaires (b) à (h) jusqu'à ce que $\tau_F$ et $\tau_B$ ne présentent pas un changement supérieur à une valeur prédéfinie entre une répétition des étapes (b) à (h) et la suivante.

11. Procédé selon la revendication 10, dans lequel ladite seconde série de portes de temps commence par une porte G1L d'une largeur peu importante, chaque porte suivante ayant une largeur plus grande que la porte qui la précède, et se termine par la porte G8L, où 8 est le nombre de portes, et où,

dans ladite étape intermédiaire (a) de détermination de ladite première estimation de ladite exponentielle de désintégration de la formation, seul un ensemble prédéterminé de portes ultérieures est utilisé pour estimer AFL1 et $\tau_F$ ; et où

dans ladite étape intermédiaire (h) de détermination de ladite estimation révisée de ladite exponentielle de désintégration de la formation, utilisant au moins l'une desdites portes plus proches de la fin de ladite salve longue pour la ré-estimation de AFL et de $\tau_F$.

12. Procédé selon la revendication 10, dans lequel :

lesdits signaux de rapport de comptage desdits signaux de portes de temps GL et GS sont convertis en signaux de logarithme naturel en prenant le logarithme népérien du rapport de comptage de chaque porte de temps ; et

lesdites estimations de AFL et $\tau_F$, ainsi que de ABS et $\tau_B$ sont déterminées par la fixation d'une ligne droite respectivement vers lesdits signaux de logarithme GL et GS où la pente de ladite ligne droite est la constante de temps de la fonction exponentielle, et l'interception après la fin de la salve respective est la valeur initiale de la fonction exponentielle.

13. Procédé selon la revendication 12, comprenant en outre l'étape de :

détermination des rapports de comptage des rayons gamma à mouvement propre se produisant naturellement dans lesdits matériaux du puits de forage et dans ladite formation et se produisant du fait de l'activation desdits matériaux du puits de forage et dans ladite formation par la répétition de la pulsation de neutrons, et la soustraction dudit comptage des rayons gamma à mouvement propre à partir desdits signaux de rapport de comptage desdits premiers et seconds rayons gamma en fonction du temps ; et

de détermination des première et seconde fonctions logarithmiques corrigées en mouvement propre du temps.

14. Procédé selon la revendication 1, où ladite étape d'irradiation se produit en un premier emplacement dudit puits de forage, ladite étape de détection suivant ladite première salve est effectuée en un second emplacement dans ledit puits de forage, et ladite étape de détection suivant ladite seconde salve est effectuée en un troisième emplacement donné dans ledit puits de forage, lesdits premier, second et troisième emplacements étant longitudinalement espacés les uns des autres.

15. Système de diagraphie pour déterminer les caractéristiques de désintégration des neutrons thermiques d'une formation terrestre entourant un puits de forage, comprenant :

des moyens de génération de neutrons pour irradier les matériaux du puits de forage et les formations terrestres avec une première salve de neutrons rapides ;

des moyens pour détecter les rapports de comptage des indications de la concentration des neutrons thermiques dans la formation et dans lesdits matériaux du puits de forage suivant ladite première salve de neutrons et générant des premiers signaux représentatifs de cette concentration, caractérisé en ce que :

ladite première salve est d'une première durée telle que, après un premier retard à partir de la fin de la première salve, la concentration du rapport de comptage des neutrons thermiques due aux matériaux du puits de forage prédomine dans le rapport de comptage total des neutrons thermiques ;

lesdits moyens de génération de neutrons sont conçus de manière à irradier les matériaux du puits de forage et les formations terrestres avec une seconde salve de neutrons rapides ;

lesdits moyens de détection sont conçus de manière à détecter les rapports de comptage des indications de la concentration des neutrons thermiques dans la formation et dans lesdits matériaux du puits de forage suivant ladite seconde salve de neutrons et pour générer des seconds signaux représentatifs de cette concentration ;

ladite seconde salve étant d'une seconde durée, différente de ladite première durée, de telle sorte que, après un second retard à partir de la fin de la seconde salve, la composante du rapport de comptage des neutrons thermiques due à la formation prédomine dans la concentration totale de neutrons thermiques, et ledit système comprend en outre :

des moyens pour déterminer, à partir desdits premiers et seconds signaux, une caractéristique de désintégration des neutrons thermiques de ladite formation $\tau_F$.

16. Système de diagraphie selon la revendication 15, dans lequel :

lesdits premiers signaux sont des signaux GS de rapport de comptage de rayons gamma accumulés dans une première série de portes de temps suivant ledit premier retard, ladite première série de portes de temps commençant par une porte d'une première largeur peu importante, chaque porte suivante étant d'une largeur plus grande que la porte qui la précède ; et

lesdits seconds signaux sont des signaux GL de rapport de comptage de rayons gamma accumulés dans une seconde série de portes de temps suivant ledit second retard, ladite seconde série de portes de temps commençant par une porte d'une seconde largeur peu importante, chaque porte suivante étant d'une largeur plus grande que la porte qui la précède.

17. Système de diagraphie selon l'une quelconque des revendications 15 ou 16, comprenant en outre des moyens pour déterminer, à partir desdits premiers et seconds signaux, la constante de désintégration thermique desdits matériaux du puits de forage $\tau_B$.

18. Système de diagraphie selon l'une quelconque des revendications 15 à 17, dans lequel

ladite première salve est d'une durée d'environ 20 microsecondes,

ledit premier retard après la fin de ladite première salve est de 18 microsecondes,

ladite seconde salve est d'une durée d'environ 160 microsecondes, et

ledit second retard après la fin de ladite seconde salve est de 60 microsecondes.

19. Système de diagraphie selon la revendication 15, dans lequel lesdits moyens de détection comprennent deux détecteurs espacés longitudinalement l'un de l'autre et espacés desdits moyens de génération de neutrons.

FIG.1

FIG. 2

FIG.3A PERIOD = $T_p$

$T_s$

SHORT NEUTRON BURSTS

FIG.3B

LOG SCALE

AMPLITUDE = ABS

BOREHOLE DECAY FROM SHORT NEUTRON BURST

FIG.3C

LOG SCALE

AMPLITUDE = AFS

FORMATION DECAY FROM SHORT NEUTRON BURST

FIG.3D

$T_L$

LONG NEUTRON BURSTS

FIG.3E

LOG SCALE

AMPLITUDE = ABL

BOREHOLE DECAY FROM LONG NEUTRON BURST

FIG.3F

LOG SCALE

AMPLITUDE = AFL

FORMATION DECAY FROM LONG NEUTRON BURST

RESIDUAL FROM PREVIOUS BURST

28

FIG.4

FIG. 5